Europäisches Patentamt

European Patent Office

Office européen des brevets

(19)

(11) Veröffentlichungsnummer: **0 011 213 B1**

# EUROPÄISCHE PATENTSCHRIFT

(45) Veröffentlichungstag der Patentschrift:
08.09.82

(51) Int. Cl.³: **G 21 C 17/00**, G 01 M 3/00

(21) Anmeldenummer: 79104317.7

(22) Anmeldetag: 05.11.79

(54) Einrichtung zur Prüfung von Behälterwänden.

(30) Priorität: 16.11.78 DE 2849763

(43) Veröffentlichungstag der Anmeldung:
28.05.80 Patentblatt 80/11

(45) Bekanntmachung des Hinweises auf die Patenterteilung:
08.09.82 Patentblatt 82/36

(84) Benannte Vertragsstaaten:
CH FR NL

(56) Entgegenhaltungen:
1. DE-A-2 418 001
2. DE-A-2 434 467
3. DE-A-2 506 415
4. DE-A-2 620 715
5. DE-A-2 636 246
6. FR-A-2 320 542
7. FR-A-2 398 583
8. Nuclear Engineering International
Vol. 21, Nr. 249, Oktober 1976
Seite 68
"Inspection approach for future reactors"

(73) Patentinhaber: **KRAFTWERK UNION AKTIENGESELLSCHAFT, c/o SIEMENS AG**
Postfach 261, D-8000 München 22 (DE)

(72) Erfinder: **Gugel, Georg, Fürther Strasse 17,
D-8501 Kalchreuth (DE)**
Erfinder: **Huber, Franz, Daimlerstrasse 38,
D-8520 Erlangen (DE)**

(74) Vertreter: **Mehl, Ernst, Dipl.-Ing. et al, Postfach 22 01 76,
D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Einrichtung zur Prüfung von Druckbehälterwänden

Die Erfindung betrifft eine Einrichtung zur Prüfung von Druckbehälterwänden, die Vorsprünge aufweisen, vorzugsweise Stutzengassen-Manipulatoreinrichtung für die Aussenprüfung von Druckbehältern, insbesondere Kernreaktor-Druckbehältern, mit mehreren zwischen den Vorsprüngen verlaufenden Führungsschienen und einem das Prüfgerät tragenden, an den Führungsschienen zum Abfahren der Prüfbahnen ferngesteuert entlang bewegbaren Schlitten, mit einer im Bereich der Enden der Führungsschienen verlegten Zubringerschiene und einem an der Zubringerschiene verfahrbar gelagerten Trägerwagen für den Schlitten und die Mess- und Versorgungsleitungen von Prüfgerät und Schlitten, wobei mittels eines Auslegers des Trägerwagens der Schlitten bezüglich der einzelnen Führungsschienen auf- und umsetzbar ist.

Eine solche Einrichtung ist in der nicht vorveröffentlichten DE-B-28 34 108 angegeben, wobei der Druckbehälter der zylindrische Reaktordruckbehälter eines Siedewasserreaktors ist, von dem die Dampf- und Speisewasserleitungen als Vorsprünge ausgehen. Die Schienen verlaufen vertikal längs Mantellinien und sind mit ihren Enden U-förmig über eine den Reaktordruckbehälter umgebende Abschirmwand geführt. Hinter dieser sitzt der Wagen zum Umsetzen des Prüfgerätes, das relativ gross ausgebildet ist, weil zwischen dem Reaktordruckbehälter und der Abschirmwand ein relativ grosser Zwischenraum vorhanden ist.

Demgegenüber sucht die Erfindung eine Lösung für den Fall, dass wenig Platz zur Verfügung steht, wie dies insbesondere im Bereich der eng nebeneinander angeordneten Stutzen für Steuerstabantriebe an dem Deckel eines Druckwasserreaktors gegeben ist, sie bezieht sich deshalb vorzugsweise auf eine Stutzengassen-Manipulatoreinrichtung für die Aussenprüfung von Druckbehältern.

Erfindungsgemäss wird die gestellte Aufgabe dadurch gelöst, dass die Führungsschienen als längsgeschlitzte Führungsrohre ausgeführt sind, dass der Schlitten innerhalb der Führungsrohre geführt und mit einem gleichfalls von den Führungsrohren eingeschlossenen und geführten zug- und drucksteifen Schubschlauch verbunden ist, welcher die Mess- und Versorgungsleitungen einschliesst, dass das Prüfgerät mittels durch den Rohrschlitz ragender Verbindungsglieder mit dem Schlitten gelenkig verbunden ist und dass ein Antrieb zur Verschiebung von Schubschlauch und Schlitten am Ausleger angebracht ist.

Beim Erfindungsgegenstand hat der Schlitten nur Führungsfunktionen, während der Antrieb dem Trägerwagen zugeordnet ist. Mithin kann der Schlitten wesentlich raumsparender ausgebildet werden. Es ergibt sich ein ähnlich gedrängter Aufbau, wie er bei der Prüfung der Rohre von Dampferzeugern in Kernkraftwerken bekannt ist (siehe z.B. FR-A-2 320 542). Dort gibt es jedoch keine Schienen, die zwischen Vorsprüngen verlaufen, weil zur Prüfung dienende Wirbelstromsonden unmittelbar in die Rohre selbst eingefahren werden. Die Führungsrohre bieten einen besonderen Schutz gegen Verschmutzung, so dass die Reparaturanfälligkeit gering ist, wie dies für Kernkraftwerksanlagen mit ihrer durch Radioaktivität gegebenen Unzugänglichkeit besonders vorteilhaft ist. Dabei kann der Querschnitt der Rohre kreisförmig oder mehreckig, insbesondere viereckig, sein. Der Rohrschlitz ist dabei bevorzugt an der der zu prüfenden Behälterwand zugewandten Seite des Führungsrohres angeordnet. Als Messleitungen dienen in erster Linie elektrische Kabel, die das Prüfgerät, vorzugsweise einen oder mehrere Ultraschallmessköpfe, mit einem Anzeige- und/oder Aufzeichnungsgerät verbinden. Als Versorgungsleitungen kommen zum Beispiel Schläuche für ein Ankoppelmedium, insbesondere Wasser, aber auch Druckluftschläuche oder ähnliches in Frage.

Am Ausleger ist vorteilhaft ein Trommelspeicher für den Schubschlauch gelagert. Mit der Trommel kann so der Schubschlauch aufgerollt und gespeichert werden. Ausserdem kann die Trommel als Antriebsglied dienen, wenn sie von einem Motor in der gewünschten Richtung in Bewegung gesetzt wird. Man kann aber auch an anderer Stelle, zum Beispiel mit einem Reibradpaar, an dem zu bewegenden Schubschlauch angreifen.

Neben der Zubringerschiene für den Wagen kann vorteilhaft eine Steuerschiene verlaufen, mit der der Ausleger zur Ausrichtung auf die Führungsrohre gekoppelt ist. Dies gilt besonders für den Fall, dass eine Vielzahl von Führungsrohren vorgesehen ist. Die Koppelung kann eine gelenkige Verbindung mit einem auf der Steuerschiene laufenden Führungsschlitten sein. Dieser Schlitten kann durch Markierungen der Steuerschiene, insbesondere durch Bohrungen, positioniert werden und an den einzelnen Stellen, zum Beispiel pneumatisch, verspannt sein, damit der Ausleger leicht auf die Schienen auszurichten ist.

Die Führungsrohre können nicht nur, wie die Schienen beim Gegenstand des eingangs genannten nicht vorveröffentlichten Patents, parallel zueinander längs Mantellinien verlaufen. Vielmehr kann man bei der Erfindung eine besonders dichte Abdeckung einer durch Vorsprünge zerklüfteten Behälterwand dadurch erreichen, dass die Führungsrohre ein sich kreuzendes Netz bilden und dass der Ausleger um mindestens den Kreuzungswinkel schwenkbar am Trägerwagen befestigt ist. Dabei sind die Führungsrohre im Bereich der Kreuzungsstellen jeweils zweckmässig unterbrochen, wobei die Länge des Auslegers ein Mehrfaches der Länge der Unterbrechungen beträgt. Bei dem genannten Längenverhältnis kann der Schlitten die Unterbrechung ohne nennenswerten Verlust an Führung überwinden und dennoch gut von dem Ausleger aufgenommen werden, wenn er von einem Führungsrohr auf das andere umgesetzt werden soll.

Es ist ferner günstig, wenn der Schlitten aus mehreren gelenkig miteinander verbundenen Gliedern besteht und wenn das Prüfgerät an einem dem Ausleger zugekehrten Teil des Schlittens angebracht ist. Mit der gelenkigen Ausbildung kann man sich Schienenkrümmungen anpassen, wie sie zum Beispiel aufgrund der Wölbung des schon genannten Deckels eines Reaktordruckbehälters erforderlich sind, wobei die vorderen, dem Ausleger abgekehrten Glieder für die Führung sorgen, während die dem Ausleger zugekehrten Glieder zum Tragen des Prüfgerätes dienen. Zu diesem Zweck kann der dem Ausleger abgekehrte Teil zugespitzt sein und mindestens eine Führungsrolle aufweisen, die in eine Führungsnut des Führungsrohres eingreift und ein Verdrehen des Schlittens um die Längsachse der Führungsrohre verhindert.

Zur näheren Erläuterung der Erfindung wird anhand der beiliegenden Zeichnung ein Ausführungsbeispiel beschrieben. Dabei zeigen:

Fig. 1 und 2 den Deckel des Reaktordruckbehälters für einen Druckwasserreaktor in einem Vertikalschnitt und einer Draufsicht;

Fig. 3 und 4 in vergrössertem Massstab eine Einzelheit der Führungsrohre.

Fig. 5 zeigt ebenfalls in vergrössertem Massstab insbesondere die Ausbildung des bei der Erfindung zum Umsetzen verwendeten Trägerwagens; und

Fig. 6 in einem Vertikalschnitt im gleichen Massstab wie Fig. 3 und 4 den Schlitten mit dem Prüfgerät.

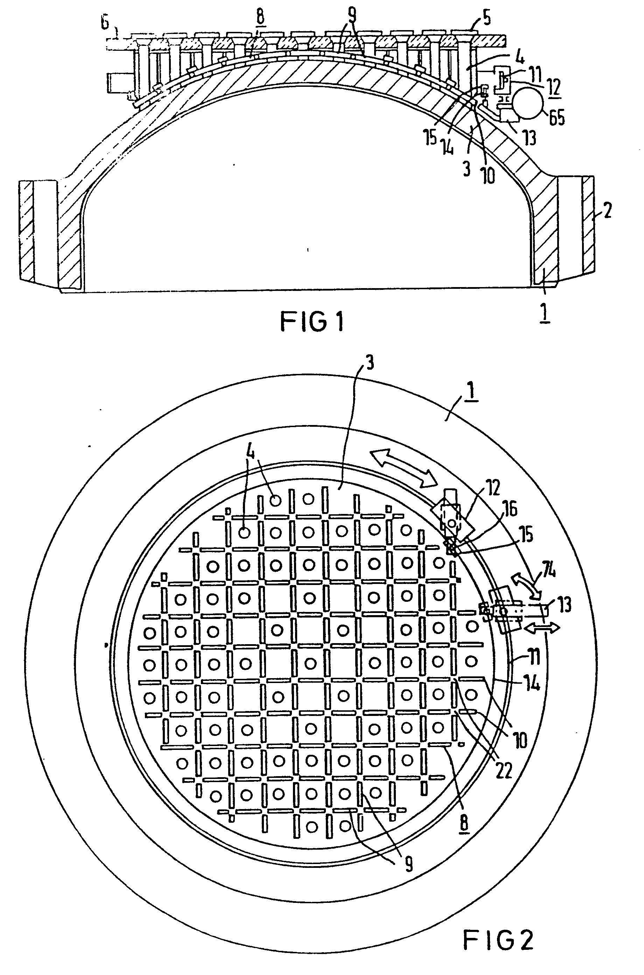

Der Deckel 1 des Reaktordruckbehälters hat einen Durchmesser von zum Beispiel 4 m und einen über den Flansch 2 hinausragenden gewölbten Bereich 3, an dem Stutzen 4 für Steuerstabantriebe in regelmässiger Verteilung angeordnet sind, wie die Fig. 2 zeigt. Die Stutzen enden in Flanschen 5, die in einer Ebene liegen und mit einer Isolierschicht 6 zur Wärmeisolierung versehen sind.

Durch die Stutzen wird die Festigkeit des Deckels verringert. Deshalb ist es wichtig, dass gerade der Deckel im Bereich der Stutzen 4 durch Überprüfen mit einem geeigneten Messgerät einer ständigen Kontrolle unterliegt, damit die Unversehrtheit und Druckfestigkeit gewährleistet ist. Andererseits ist der Deckelbereich nicht nur wegen der hohen Temperaturen und der Strahlung praktisch unzugänglich, vielmehr wird die Zugänglichkeit für Prüfeinrichtungen, insbesondere für Ultraschallmessungen, auch durch die Stutzen 4 behindert.

Wie Fig. 2 zeigt, ist der Deckel 1 in seinem gewölbten Bereich mit den Stutzen 4 mit einem Netz 8 von Führungsrohren 9 überzogen, die sich rechtwinklig kreuzen und mit ihren Enden 10 annähernd auf einem Kreis liegen. Die von dem Netz 8 abgedeckte Fläche des Deckels ist von einer kreisförmigen Zubringerschiene 11 eingeschlossen, die einen Trägerwagen 12 trägt. Der Trägerwagen 12 besitzt einen schwenkbaren Ausleger 13, der mit einer Steuerschiene 14 gekoppelt ist. Die Steuerschiene 14 liegt kreisförmig zwischen der Zubringerschiene 11 und dem Netz 8 der Führungsrohre 9. Zur Kopplung dient ein Führungsschlitten 15, an dem der Ausleger 13 über ein Gelenk 16 angekoppelt ist.

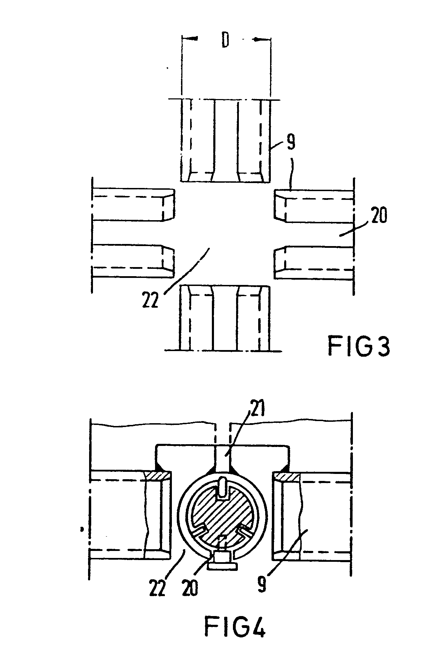

Die Führungsrohre 9 (vgl. Fig. 3, 4) werden von im Querschnitt kreisförmigen Rohren gebildet, die an der Unterseite einen Schlitz 20 aufweisen und über einen Steg 21 mit dem Deckel 1 des Reaktordruckbehälters verbunden sind. Im Bereich einer Kreuzungsstelle 22 sind die Rohre 9 mit dem Schlitz 20 unterbrochen. Die Unterbrechung ist etwas länger als der mit D bezeichnete Aussendurchmesser der Führungsrohre 9, jedoch um ein Mehrfaches kleiner als die Länge des Auslegers 13.

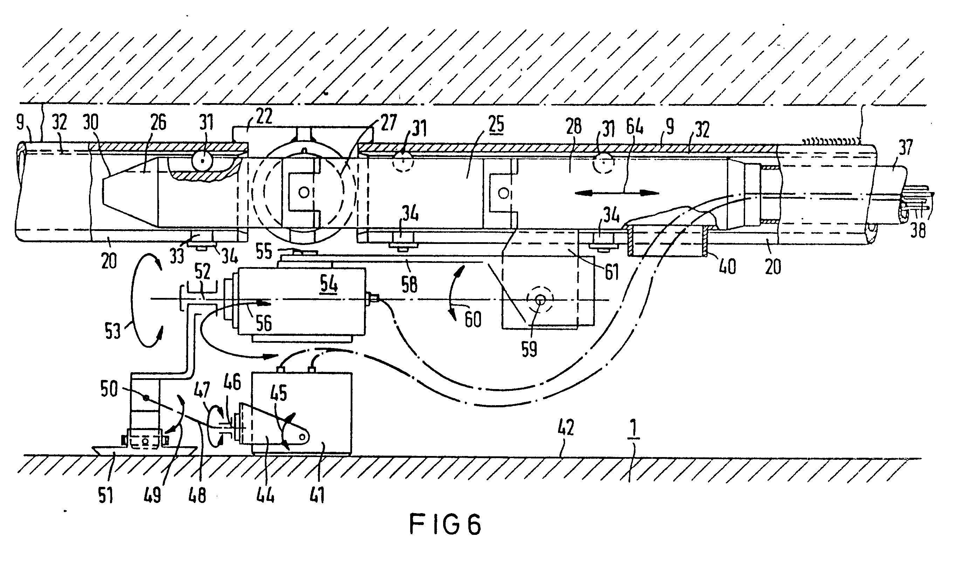

Die Fig. 6 zeigt, dass in dem Führungsrohr 9 ein Schlitten 25 geführt werden kann, der drei gelenkig miteinander verbundene Teile 26, 27 und 28 aufweist. Der äussere Teil 26 besitzt einen konisch zugespitzten Bereich 30. In dem anschliessenden zylindrischen Teil ist eine Führungsrolle 31 gelagert, die in eine Führungsnut 32 der Führungsrohre 9 eingreift. Eine diametral gegenüberliegende weitere Führungsrolle 33 greift in den Schlitz 20 und besitzt einen Bund 34, der über die Breite des Schlitzes hinausragen kann.

An dem der Spitze 30 gegenüberliegenden Ende ist der Schlitten 25 mit einem Schubschlauch 37 verbunden, der zug- und drucksteif ist, jedoch in seitlicher Richtung relativ leicht zu verformen ist. Der Schubschlauch besteht zum Beispiel aus Kunststoff, wie Teflon. Er umschliesst Mess- und Versorgungsleitungen 38. Diese sind im Bereich des Schlittenteils 28 durch einen in den Schlitz 20 ragenden Rahmen 40 zu einem Prüfkopf 41 geführt, der auf der zu prüfenden Oberfläche 42 des Deckels 1 aufliegt.

Der Prüfkopf 41 ist ein an sich bekannter Ultraschallmesskopf und in einer Gabel 44 schwenkbar gelagert, wie durch den Pfeil 45 angedeutet ist. Die Gabel ist ihrerseits mit einem Gelenk 46 in Richtung des Pfeiles 47 drehbar an einem Hebel 48 gelagert, der in Richtung des Pfeiles 49 schwenkbar ist. Der Hebel 48 sitzt in einem Gelenk 50 an einer Kufe 51, die auf der Oberfläche 42 aufsitzt. Die Kufe 51 ist mit einem weiteren Gelenk 52 in Richtung des Pfeiles 53 schwenkbar an einem Haltekörper 54 befestigt, der selbst mit einem Gelenk 55 in Richtung des Pfeiles 56 schwenkbar ist. Der Haltekörper 54 sitzt an einem Arm 58, der um den Drehpunkt 59 in Richtung des Pfeiles 60 pneumatisch schwenkbar angelenkt ist. Der Drehpunkt gehört zu einer Lasche 61, die durch den Schlitz 20 ragt und mit dem Teil 28 des Schlittens 25 fest verbunden ist.

Die Fig. 6 zeigt ferner, dass auch die Teile 27 und 28 mit Führungsrollen in der Nut 32 und in dem Schlitz 20 geführt sind, so dass die Bewegung in Richtung des Pfeiles 64, die durch das Führungsrohr 9 vorgegeben wird, ohne grossen Reibungswiderstand ausgeführt werden kann.

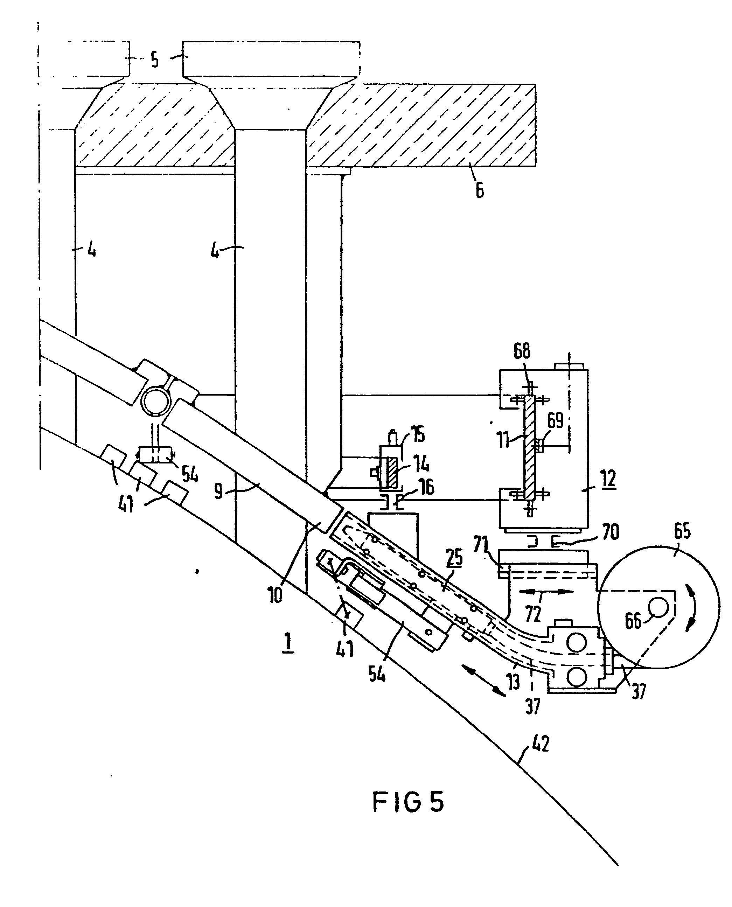

In Fig. 5 ist zu sehen, wie der Schlitten 25 in den Ausleger 13 des Trägerwagens 12 eingefahren ist. Der Schubschlauch 37 ist dabei nahezu vollständig auf eine Trommel 65 aufgewickelt, die an dem Ausleger 13 bei 66 gelagert ist und als Antrieb für den Schlitten 25 dient. Deshalb kann der Trägerwagen 12 auf der im Querschnitt rechteckigen Fahrschiene 11, auf der er mit sechs Führungsrollen 68 geführt ist, unter Verwendung einer Zahnstange 69 gesteuert verfahren werden. Dabei wird der Ausleger 13 durch die Steuerschiene 14 geführt und auf das nächste Führungsrohr 9 ausgerichtet, so dass der Schlitten 25 mit dem Haltekörper 54 und dem daran befestigten Prüfkopf 41 umgesetzt werden kann. Die Anpassung des Auslegers 13 an die Führungsrohre 9 nach Neigung und Länge kommt dadurch zustande, dass der Ausleger am Trägerwagen 12 mit einem Drehpunkt 70 befestigt ist und ausserdem eine Längsführung 71, zum Beispiel in Form einer Schwalbenschwanzverbindung, aufweist. Die Längsverbindung gestattet Bewegungen in Richtung des Pfeils 72, während der Drehpunkt 70 Schwenkungen ermöglicht, wie in Fig. 2 durch den Pfeil 74 angedeutet ist.

Neben den vorstehend beschriebenen Prüfungen des Reaktordruckbehälterdeckels im Bereich der Steuerstabstutzen lässt sich die Erfindung noch mit besonderem Vorteil zur Prüfung von Druckhalterböden im Bereich der Heizstabstutzen sowie an Längsnähten in Rohrleitungskrümmern bei Hauptkühlmittelleitungen einsetzen, wenn diese durch sogenannte Ausschlagsicherungen in kurzen Abständen unzugänglich gemacht sind.

**Patentansprüche**

1. Einrichtung zur Prüfung von Druckbehälterwänden, die Vorsprünge aufweisen, vorzugsweise Stutzengassen-Manipulatoreinrichtung für die Aussenprüfung von Druckbehältern, insbesondere Kernreaktor-Druckbehältern, mit mehreren zwischen den Vorsprüngen verlaufenden Führungsschienen und einem das Prüfgerät tragenden, an den Führungsschienen zum Abfahren der Prüfbahnen ferngesteuert entlang bewegbaren Schlitten, mit einer im Bereich der Enden der Führungsschienen verlegten Zubringerschiene und einem an der Zubringerschiene verfahrbar gelagerten Trägerwagen für den Schlitten und die Mess- und Versorgungsleitungen von Prüfgerät und Schlitten, wobei mittels eines Auslegers des Trägerwagens der Schlitten bezüglich der einzelnen Führungsschienen auf- und umsetzbar ist, dadurch gekennzeichnet, dass die Führungsschienen als längsgeschlitzte Führungsrohre (9) ausgeführt sind, dass der Schlitten (25) innerhalb der Führungsrohre (9) geführt und mit einem gleichfalls von den Führungsrohren (9) eingeschlossenen und geführten zug- und drucksteifen Schubschlauch (37) verbunden ist, welcher die Mess- und Versorgungsleitungen (38) einschliesst, dass das Prüfgerät (41, 48, 51, 54) mittels durch den Rohrschlitz (20) ragender Verbindungsglieder (61, 58) mit dem Schlitten (25) gelenkig verbunden ist und dass ein Antrieb (65) zur Verschiebung von Schubschlauch (37) und Schlitten (25) am Ausleger (13) angebracht ist.

2. Einrichtung nach Anspruch 1, dadurch gekennzeichnet, dass am Ausleger (13) ein Trommelspeicher (65) für den Schubschlauch (37) gelagert ist.

3. Einrichtung nach Anspruch 1, dadurch gekennzeichnet, dass der Rohrschlitz (20) an der der zu prüfenden Behälterwand (42) zugewandten Seite des Führungsrohres (9) angeordnet ist.

4. Einrichtung nach Anspruch 1, dadurch gekennzeichnet, dass der Schlitten (25) aus mehreren gelenkig miteinander verbundenen Gliedern (26, 27, 28) besteht.

5. Einrichtung nach einem der Ansprüche 1 bis 4, dadurch gekennzeichnet, dass neben der Zubringerschiene (11) eine Steuerschiene (14) verläuft, mit der der Ausleger (13) zur Ausrichtung auf die Führungsrohre (9) gekoppelt ist.

6. Einrichtung nach Anspruch 5, dadurch gekennzeichnet, dass die Steuerschiene (14) Markierungen, insbesondere Bohrungen, zur Ausrichtung auf die Führungsrohre (9) aufweist.

7. Einrichtung nach einem der Ansprüche 1 bis 6, dadurch gekennzeichnet, dass die Führungsrohre (9) ein sich kreuzendes Netz bilden und dass der Ausleger (13) um mindestens den Kreuzungswinkel schwenkbar am Trägerwagen (12) befestigt ist.

8. Einrichtung nach Anspruch 7, dadurch gekennzeichnet, dass die Führungsrohre (9) im Bereich der Kreuzungsstellen (22) unterbrochen sind und dass die Länge des Auslegers (13) ein Mehrfaches der Länge der Unterbrechung beträgt.

9. Einrichtung nach einem der Ansprüche 1 bis 8, dadurch gekennzeichnet, dass das Prüfgerät (41) an einem dem Ausleger (13) zugekehrten Teil (28) des Schlittens (25) angebracht ist.

10. Einrichtung nach Anspruch 9, dadurch gekennzeichnet, dass der dem Ausleger (13) abgekehrte Teil (26) des Schlittens (25) zugespitzt ist und mindestens eine Führungsrolle (31) aufweist, die in eine Führungsnut (32) des Führungsrohres (9) eingreift und ein Verdrehen des Schlittens (25) um die Längsachse der Führungsrohre (9) verhindert.

**Revendications**

1. Installation pour tester les parois de réservoirs sous pression présentant des parties saillantes, de préférence installation de manipulation de voies entre tubulures pour le contrôle extérieur du réservoir sous pression, plus particulièrement de réservoirs sous pression pour réacteurs nucléaires avec plusieurs rails de guidage s'étendant entre les parties saillantes et avec un chariot portant l'appareil de contrôle et commandé à distance pour se déplacer le long des rails en vue de parcourir les voies de contrôle, ainsi qu'avec un rail d'accès posé dans le voisinage des extrémités des rails de guidage et un wagonnet-porteur pour le chariot et pour les conducteurs et conduits de mesure et d'alimentation de l'appareil de contrôle et du chariot, et monté sur le rail d'accès pour y être déplacé, le chariot pouvant, à l'aide d'une console portée par le wagonnet, être placé sur les différents rails de guidage ou être déplacé d'un rail de guidage sur un autre, caractérisée par le fait que les rails de guidage sont réalisés par le fait que les rails de guidage sont réalisés sous la forme de tubes de guidage (9) fendus longitudinalement, que le chariot (25) est guidé à l'intérieur des tubes de guidage (9) et est relié à un tuyau de poussée (3) résistant à la traction et à la presion et également logé dans les tubes de guidage (9), ledit tuyau contenant les conduites et conducteurs de mesure et d'alimentation (38), que l'appareil de contrôle (41, 48, 51, 54) est articulé avec le chariot (25) à l'aide d'organes de liaison (61, 56) passant par la fente (20) des tubes et que l'entraînement (65) pour le déplacement du tuyau de poussée (37) et du chariot (25) est monté sur la console (13).

2. Installation selon la revendication 1, caractérisée par le fait que sur la console (13) est monté un touret (65) pour le tuyau de poussée (37).

3. Installation selon la revendication 1, caractérisée par le fait que la fente (20) des tubes est prévue du côté du tube de guidage (9) qui est voisin de la paroi du réservoir (42) à contrôler.

4. Installation selon la revendication 1, caractérisée par le fait que le chariot (25) est constitué par plusieurs éléments (26, 27, 28) articulés entre eux.

5. Installation selon l'une des revendications 1 à 4, caractérisée par le fait que près du rail d'accès (11) s'étend un rail de commande (14) auquel est accouplée la console (13) pour l'alignement sur les tubes de guidage (9).

6. Installation selon la revendication 5, caractérisée par le fait que le rail de commande (14) présente des repères, plus particulièrement des perçages pour l'alignement sur les tubes de guidage (9).

7. Installation selon l'une des revendications 1 à 6, caractérisée par le fait que les tubes de guidage (9) forment entre eux un réseau croisé et que la console (13) est fixée au wagonnet-porteur (12) de façon à pouvoir pivoter au moins d'un angle égal à l'angle de croisement.

8. Installation selon la revendication 7, caractérisée par le fait que les tubes de guidage (9) sont interrompus au niveau des points de croisement (22) et que la longueur de la console (13) est égale à un multiple de la longueur des interruptions.

9. Installation selon l'une des revendications 1 à 8, caractérisée par le fait que l'appareil de contrôle (41) est monté sur une partie (28) du chariot (25), qui est voisine de la console (13).

10. Installation selon la revendication 9, caractérisée par le fait que la partie (26) du chariot (25), qui est éloignée de la console (13) est pointue et comporte au moins un galet de guidage (31) qui pénètre dans une gorge de guidage (32) du tube de guidage (9) et empêche une rotation du chariot (25) autour de l'axe longitudinal des tubes de guidage (9).

**Claims**

1. Apparatus for testing pressure container walls, which exhibit projections, particularly connection duct-manipulating apparatus for the external testing of pressure containers, in particular nuclear reactor pressure containers, said apparatus comprising a plurality of guide rails which run between the projections; a slide which carries the testing device and which can be moved along the guide rails by remote control in order to operate the test rail system; a conveyor rail which is arranged in the vicinity of the ends of the guide rails; and a support carriage for the slide and the measuring and supply lines for the testing device and the slide, which is displaceably positioned on the conveyor rail, whereby the slide can be brought into position and out of position with respect to the individual guide rails by means of an arm of the slide support carriage, characterised in that the guide rails are constructed as longitudinally slotted guide tubes (9); that the slide (25) is guided within the guide tubes (9) and is connected to a pushing hose (37) which is resistant to tension and pressure, which is enclosed and guided by the guide tubes (9) and which surrounds the measuring and supply lines (38); that the testing device (41, 48, 51, 54) is flexibly connected to the slide (25) by means of connecting members (61, 56) which project through the tube slot (20); and that a drive (65) is secured to the arm (13) for moving the pushing hose (37) and the slide (25).

2. Apparatus as claimed in Claim 1, characterised in that a storage drum (65) for the pushing hose (37) is fixed to the arm (13).

3. Apparatus as claimed in Claim 1, characterised in that the tube slot (20) is arranged at the side of the guide tube (9) which faces towards the wall (42) of the container to be tested.

4. Apparatus as claimed in Claim 1, characterised in that the slide (25) consists of a plurality of members (26, 27, 28) which are flexibly connected to one another.

5. Apparatus as claimed in one of Claims 1 to 4, characterised in that a control rail (14), to which the arm (13) is coupled for alignment with the guide tubes (9), runs beside the conveyor rail (11).

6. Apparatus as claimed in Claim 5, characterised in that the control rail (14) has markings, in particular bores, for the alignment with the guide tubes (9).

7. Apparatus as claimed in one of Claims 1 to 6, characterised in that the guide tubes (9) form an intersecting network and that the arm (13) is secured to the support carriage (12) so as to be rotatable through at least the intersection angle.

8. Apparatus as claimed in Claim 7, characterised in that the guide tubes (9) are interrupted in the region of the intersection points (22) and that the length of the arm (13) is a multiple of the

9     0 011 213     10

length of the interruption.

9. Apparatus as claimed in one of Claims 1 to 8, characterised in that the testing device (41) is secured to a part (28) of the slide (25) which faces towards the arm (13).

10. Apparatus as claimed in Claim 9, characterised in that the part (26) of the slide (25) which faces away from the arm (13) is tapered and has at least one guide roller (31) which engages into a guide groove (32) in the guide tube (9) and which prevents the slide (25) from being rotated about the longitudinal axis of the guide tube (9).

FIG 1

FIG 2

FIG 3

FIG 4

FIG 5

FIG 6